# EUROPEAN PATENT APPLICATION

(11) **EP 4 717 856 A1**
(43) Date of publication of application: **01.04.2026**
(21) Application number: 24934773.3
(22) Date of filing: 18.09.2024
(51) Int. Cl.: E04H 15/06, E04H 15/34, B60P 3/34

(54) **TENT STRUCTURE**

(30) Priority: 08.04.2024 CN 202420711670 U; 11.04.2024 CN 202420749071 U; 15.04.2024 CN 202420775063 U; 24.05.2024 CN 202421151576 U
(71) Applicant: Wild Land Outdoor Gear Ltd., Xiamen, Fujian 361022 (CN)
(72) Inventor: ZHOU, Chuan, Xiamen, Fujian 361022 (CN); MAO, Muhua, Xiamen, Fujian 361022 (CN); XIANG, Tinghai, Xiamen, Fujian 361022 (CN); WU, Jianwei, Xiamen, Fujian 361022 (CN)
(74) Representative: Clarke, Modet y Cía., S.L.
(86) International application number: PCT/CN2024/119413
(87) International publication number: WO 2025/213708

(57) **Abstract**

Disclosed in the present invention is a tent structure, comprising a plurality of base plates, wherein the edges of the plurality of base plates are hinged to each other, such that the base plates can be flipped to be unfolded, or can be flipped to be folded. The tent structure of the present invention is simpler, and is easy to use.

## Description

### TECHNICAL FIELD

The present disclosure relates to the technical field of outdoor products, and in particular relates to a tent structure.

### BACKGROUND

A roof tent for a vehicle is a tent that can be arranged on a roof of the vehicle. The roof tent is favored by people for its comfort in use, as it is elevated from the ground, which is a feature not shared by other tents. This renders the roof tent less susceptible to ground dampness and moisture during use. The roof tent can be directly folded on the roof of the vehicle for convenient transportation when not used.

However, in the field of roof tent, there is still room for improvement in terms of making the tent structure more concise, making the tent more stable, enabling a better support for tarpaulin of the tent, reducing wind noise when the tent is installed on the roof of the vehicle, and enhancing a moisture-proof effect.

### SUMMARY

The aim of the present disclosure is to provide a tent structure so as to make the tent structure more concise and easy to use.

To achieve the above aim, the solution of the present disclosure is providing a tent structure wherein the tent structure includes a plurality of base plates. Edges of the base plates are hinged to one another to allow each of the base plates to rotate to a deployed state or a folded state.

Furthermore, the tent structure is provided with three base plates, which are a front plate, a rear plate and a middle plate. The tent structure further includes a rope. One side of the front plate is pivotally connected to one side of the middle plate. One side of the rear plate is pivotally connected to another side of the middle plate. The front plate and the middle plate are rotatable to the deployed state in which the front plate and the rear plate are flatly deployed or to the folded state in which the front plate and the rear plate are folded onto one another. One end of the rope is connected to the front plate. Another end of the rope is connected to the rear plate. The rear plate is fixed on a roof of a vehicle. The front plate is tensioned in a suspended manner by the rope in the deployed state of the front plate and the rear plate.

Furthermore, the tent structure further includes a middle frame arranged on the middle plate. A middle part of the rope is connected to the middle frame. In the deployed state of the front plate and the rear plate, the middle frame is erected, the rope, the front plate and the middle frame form a triangular structure, and the rope, the rear plate and the middle frame also form a triangular structure.

Furthermore, a pulley is arranged on the middle frame, and the middle part of the rope is slidably connected to the pulley.

Furthermore, the middle frame is an inverted U-shaped frame. A bottom of the middle frame is fixed on the middle plate. The rope is connected to a middle part of a side of the middle plate. The middle plate has a width greater than a width of the side of the middle frame to form a T-shaped frame structure with the side of the middle frame. Sides of the front plate and the rear plate are provided with ridges. The ridges cooperate with the T-shaped frame in the folded state of the front plate and the rear plate.

Furthermore, the tent structure includes two ropes. Each of the two ropes is connected to a respective one of two sides of the middle plate. One end of the rope is connected to the front plate, and another end of the rope is connected to the rear plate.

Furthermore, the front plate is inclined in a manner that a front end of the front plate is higher than a rear end of the front plate in the deployed state of the front plate and the rear plate.

Furthermore, each of the base plates is provided with a guiding part. The guiding parts are in continuity with each other in a straight line in a state in which the base plates are rotated into a same plane. A stopper is arranged in the guiding parts. The stopper is slideable along the guiding parts to prevent rotating and folding of the base plates when the stopper spans at least two base plates, and to allow the rotating and folding of the base plates when the stopper slides onto only one of the base plates.

Furthermore, the tent structure is provided with three base plates, which are a bottom plate, a side plate and a top plate. A rear edge of the bottom plate is rotatably connected to a front edge of the side plate, and a rear edge of the side plate away from the bottom plate is rotatably connected to a front edge of the top plate to allow the side plate to rotate to an erected position relative to the bottom plate and the top plate to rotate to a position above the bottom plate, or allow the bottom plate, the side plate and the top plate to rotate into a same plane;

Each of the bottom plate, the side plate and the top plate is provided with a guiding part. The guiding parts are in continuity with each other in a straight line in a state in which the bottom plate, the side plate and the top plate are rotated into a same plane. The stopper is arranged in the guiding parts. The stopper is slideable along the guiding parts to prevent rotating of the side plate and the top plate when the stopper spans the bottom plate, the side plate and the top plate, and to allow the rotating of the side plate and the top plate when the stopper slides onto only the bottom plate or the top plate.

Furthermore, the stopper is provided with a bolt movable with the stopper. Holes are provided on moving passages of the bolt on the top plate and the bottom plate to prevent sliding of the stopper when the bolt is aligned with the hole and inserted into the hole.

Furthermore, the tent structure is provided with three base plates, which are a bottom plate, a side plate and a top plate. An edge of the bottom plate is hinged to an edge of the side plate, and another edge of the side plate away from the bottom plate is hinged to an edge of the top plate, to allow the side plate to rotate to an erected position relative to the bottom plate, and the top plate to rotate to a position above the bottom plate to come into the folded state and form an accommodation space with the bottom plate, and to allow the side plate and the top plate to rotate into a same plane with the bottom plate to come into the deployed state;

A supporting frame is fixed on the side plate. In the deployed state, the supporting frame extends upward to support a tarpaulin above the side plate, the top plate and the bottom plate. In the folded state, the supporting frame is rotated with the side plate until located between the top plate and the bottom plate, a top side of the supporting frame abuts against the top plate, and a bottom side of the supporting frame abuts against the bottom plate, to enclose the accommodation space with the side plate from outside.

Furthermore, the supporting frame is U-shaped, perpendicular to the side plate, and fixed to the side plate on an opening side of a U-shape structure.

Furthermore, a bottom plate flange protrudes from a side of the bottom plate for abutting against the supporting frame. The bottom plate abuts against the supporting frame by means of the bottom plate flange. A top plate flange protrudes from a side of the top plate for abutting against the supporting frame. The top plate abuts against the supporting frame by means of the top plate flange.

Furthermore, bosses protrude from portions of the side plate for fixing the supporting frame. The bottom plate flange and the top plate flange abutting against the bosses in the folded state.

Furthermore, a shutter is formed on an outer side of each boss. The shutter shelters seams formed due to the abutment of the boss and the bottom plate flange as well as the top plate flange in the folded state.

Furthermore, a side of the tarpaulin is connected to the bottom plate, and another side of the tarpaulin is connected to the top plate. The tarpaulin is folded within the accommodation space when the top plate is rotated to the position above the bottom plate. The tarpaulin is deployed above the bottom plate, the side plate and the top plate when the side plate and the top plate are rotated to the deployed state. The tent structure further includes a plurality of supporting rods. Bottom ends of the supporting rods are hinged to the bottom plate, the side plate or the top plate. Top ends of the supporting rods are connected to the tarpaulin at positions spaced apart from each other on the tarpaulin.

Furthermore, the plate member includes a bottom plate body configured to be fixed above a roof of a vehicle. At least one drainage and ventilation opening is provided on the bottom plate body. The drainage and ventilation opening passes through an upper surface and a lower surface of the bottom plate body.

Furthermore, the bottom plate body is composed of a plurality of plate members. The plate members are spaced apart from each other to form a respective drainage and ventilation opening between two adjacent plate members.

Furthermore, each of the plate members is provided with tabs extending towards the drainage and ventilation openings next to this plate member. Two tabs of each two adjacent plate members are spaced apart from each other vertically and one of the two tabs extends below another of the two tabs.

Furthermore, each of the drainage and ventilation openings has an elongated shape extending linearly. An extending direction of each of the drainage and ventilation openings is a front-rear direction of the roof of the vehicle.

After adopting the above solutions, beneficial effects of the present disclosure are as follows:
(1) The edges of the base plates are hinged to one another to allow each of the base plates to rotate to the deployed state or the folded state. Therefore, when being used, the base plates can rotate to deploy into a same plane so as to form a floor of the tent, and a complete tent structure formed by arranging the tarpaulin on the tent;
(2) In some preferred embodiments, a rope is connected between the front plate and the rear plate. In the deployed state of the front plate and the rear plate, the front plate is tensioned by the rope, such that the front plate is supported by the rope to be balanced in a suspended manner;
(3) In some preferred embodiments, each of the base plates is provided with a guiding part. The guiding parts are in continuity with each other in a straight line in a state in which the base plates are rotated into a same plane. A stopper is arranged in the guiding parts. The stopper is slideable along the guiding parts to prevent rotating and folding of the base plates when the stopper spans at least two base plates, and to allow the rotating and folding of the base plates when the stopper slides onto only one of the base plates. That is, the rotating of the base plates is prevented or allowed by the sliding of the stopper in the guiding part, which makes it easy to use and leads to a simple structure.
(4) In some preferred embodiments, an edge of the bottom plate is hinged to an edge of the side plate, and another edge of the side plate away from the bottom plate is hinged to an edge of the top plate, to allow the side plate to rotate to an erected position relative to the bottom plate, and the top plate to rotate to a position above the bottom plate to come into the folded state, and to allow the side plate and the top plate to rotate into a same plane with the bottom plate to come into the deployed state. A supporting frame is fixed on the side plate. In the deployed state, the supporting frame extends upward to support a tarpaulin above the side plate, the top plate and the bottom plate. The tarpaulin is firmly supported since the supporting frame is connected to the side plate in a fixed manner. In the folded state, the supporting frame is rotated with the side plate until located between the top plate and the bottom plate, a top side of the supporting frame abuts against the top plate, and a bottom side of the supporting frame abuts against the bottom plate, to enclose the accommodation space with the side plate from outside between the top plate and the bottom plate. Therefore, the supporting frame in the folded state forms a part of a structure for enclosing the accommodation space without taking up extra space, which leads to a concise structure.
(5) In some preferred embodiments, the base plates include a bottom plate body configured to be fixed above a roof of a vehicle transversely. At least one drainage and ventilation opening is provided on the bottom plate body. The drainage and ventilation opening passes through an upper surface and a lower surface of the bottom plate body. Therefore, when rainwater falls on an outer surface of the tarpaulin of the roof tent and then slides along the outer surface of the tarpaulin onto the bottom plate body of the roof tent, the rainwater can flow out of the roof tent through the drainage and ventilation opening. Therefore, during using, an area below bedding or a floor mat can be ventilated through the drainage and ventilation opening when the bedding or the floor mat is arranged on the bottom plate body, which enables the damp bedding or the damp floor mat to dry more easily, and leads to less wind noise compared with a skeleton-shaped design.

### BRIEF DESCRIPTION OF THE DRAWINGS

FIG. 1 is a front view of the first embodiment;
FIG. 2 is a perspective view of the first embodiment;
FIG. 3 is a partial enlarged view of portion "A" in FIG. 2;
FIG. 4 is a first perspective view of the second embodiment;
FIG. 5 is a second perspective view of the second embodiment;
FIG. 6 is a partial enlarged view of portion "B" in FIG. 5;
FIG. 7 is a schematic view showing that the rotating of the side plate and the top plate is allowed by the stopper in the third embodiment;
FIG. 8 is a schematic view showing that the rotating of the side plate and the top plate is prevented by the stopper in the third embodiment;
FIG. 9 is an enlarged view of portion "C" in FIG. 8;
FIG. 10 is a schematic view of the top plate in the third embodiment;
FIG. 11 is an enlarged view of portion "D" in FIG. 10;
FIG. 12 is a schematic view of the stopper in the third embodiment;
FIG. 13 is a perspective view of the fourth embodiment in the deployed state with the tarpaulin removed;
FIG. 14 is a perspective view of the fourth embodiment in the folded state;
FIG. 15 is an exploded view of the fourth embodiment with the tarpaulin removed and the supporting frame detached from the side plate;
FIG. 16 is a partial enlarged view of portion "E" in FIG. 15;
FIG. 17 is an exploded view of the fourth embodiment from another perspective with the tarpaulin removed and the supporting frame detached from the side plate;
FIG. 18 is a partial enlarged view of portion "F" in FIG. 17;
FIG. 19 is a side view of the fourth embodiment with the tarpaulin installed;
FIG. 20 is a cross-sectional view of the fourth embodiment in the folded state with the tarpaulin removed;
FIG. 21 is a partial enlarged view of portion "G" in FIG. 20;
FIG. 22 is a schematic view of the fourth embodiment with the bottom plate flange and the top plate flange abutting against the bosses;
FIG. 23 is a perspective view of the base plates according to a preferred embodiment;
FIG. 24 is a partial enlarged view of portion "F" in FIG. 23;
FIG. 25 is a perspective view of a preferred embodiment with the tent body assembled;
FIG. 26 is a side view of a preferred embodiment with the tent body installed;
FIG. 27 is a bottom perspective view of a preferred embodiment with the tent body assembled;
FIG. 28 is a perspective view of the bottom plate frame in a preferred embodiment with the base plates removed;
FIG. 29 is a schematic view of another implementation of the rims on the base plates in a preferred embodiment.

List of reference signs: 1-front plate, 2-rear plate, 3-rope, 4-inverted U-shaped supporting rod, 5-guiding rod, 6-luggage rack, 7-middle frame, 71-pulley, 72-middle plate, 73-mounting piece, 9-screw, 10-ridge, 11-bottom plate, 12-side plate, 13-top plate, 14-guiding part, 15-sliding groove, 16-stopper, 17-soft protector, 18-lug, 19-bolt, 20-spring pin, 21-hole, 25-accommodation space, 26-supporting frame, 27-tarpaulin, 28-sealing strip, 29-supporting rod, 30-plug, 31-bottom plate flange, 32-top plate flange, 33-boss, 34-shutter, 35-bottom plate body, 36-drainage and ventilation opening, 37-plate member, 38-tab, 39-bottom plate frame, 40-mounting groove, 41-supporting beam, 42-tent body, 43-tent space.

### DETAILED DESCRIPTION

The present disclosure is described in detail with reference to the drawings and specific embodiments hereinafter.

Embodiments of the present disclosure will be described in detail with reference to the drawings hereinafter. It should be noted that the present disclosure can be implemented in different forms and is not limited to the embodiments described herein. The purpose of providing these embodiments is to make the present disclosure thorough and complete, and to fully convey the scope of the present disclosure to those skilled in the art.

The present disclosure provides a tent structure including a plurality of base plates. Edges of the base plates are hinged to one another to allow each of the base plates to rotate to a deployed state or a folded state. Therefore, when being used, the base plates can rotate to deploy into a same plane so as to form a floor of the tent, and a complete tent structure formed by arranging a tarpaulin on the tent. Preferably, the tarpaulin is connected to the corresponding base plates, so that the tarpaulin can be deployed above the base plates with the base plates when the base plates rotate into a same plane, and so that the base plates can rotate to the folded state to save space.

### First embodiment

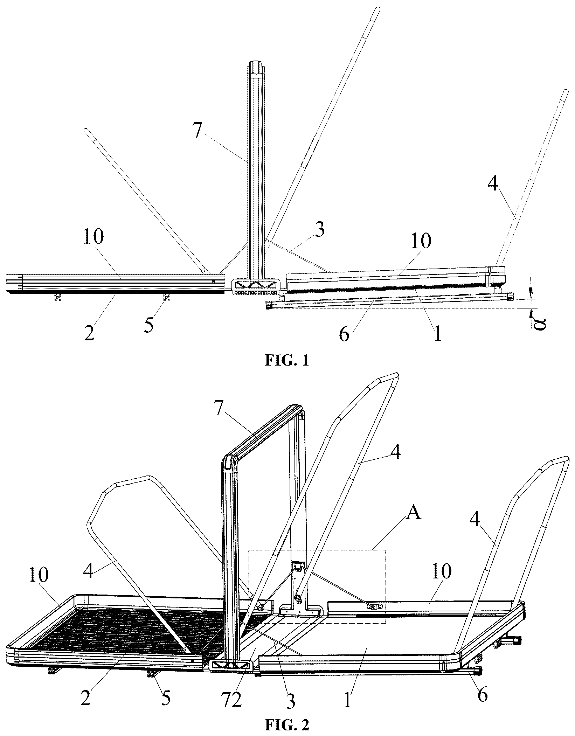

As shown in FIGS. 1-3, this embodiment provides a stabilizing device implemented by a rope for a roof tent, which includes a front plate 1, a rear plate 2, a middle plate 72, a rope 3, and an inverted U-shaped supporting rod 4. The front plate 1, the rear plate 2, and the middle plate 72 form a three-fold structure of a bottom frame of the tent. A rear side of the front plate 1 is pivotally connected to one side of the middle plate 72, and a front side of the rear plate 2 is pivotally connected to another side of the middle plate 72. The rear plate 2 is fixed on a roof of a vehicle. The front plate 1 and the middle plate 72 are rotatable to the folded state in which the front plate 1 and the rear plate 2 are folded onto one another. At this time, the middle plate 72 is perpendicular to the rear plate 2, so that there is enough space between the front plate 1 and the rear plate 2 in the folded state to accommodate the tarpaulin and other frame structures, such as the inverted U-shaped supporting rod 4, the middle frame 7 and so on. The front plate 1 and the middle plate 72 are rotatable in an opposite direction to the deployed state in which the front plate 1 and the rear plate 2 are flatly deployed. At this time, the middle plate 72 is also flatly deployed between the front plate 1 and the rear plate 2. The middle plate can increase the space within the tent.

One end of the rope 3 is connected to the front plate 1, another end of the rope 3 is connected to the rear plate 2. The rear plate is fixed on the roof of the vehicle. The front plate 1 is tensioned in a suspended manner by the rope 3 in the deployed state of the front plate 1 and the rear plate 2. The rope 3 provides supporting force to the front plate 1. Thus, the front plate 1 can be balanced in the suspended manner even without a support of a ladder. With the support of the ladder (not shown in the Drawings) which is arranged at a front end of the front plate 1, the front plate 1 is more stable with a greater load-bearing capacity to hold more goods, thus improving the user experience during an outdoor travel.

With reference to FIG. 2, at least one inverted U-shaped supporting rod 4 is provided. A lower end of the inverted U-shaped supporting rod 4 is pivotally connected to the front plate 1 and/or the rear plate 2. The tarpaulin is arranged on the front plate 1, the rear plate 2 and the inverted U-shaped supporting rod 4. Moreover, at least one inverted U-shaped supporting rod 4 is arranged at the front end of the front plate 1 to form an opening for entering and exiting the tent.

With reference to FIG. 1, a bottom of the rear plate 2 is provided with a guiding rod 5 (specifically an European-standard guiding rod) for connecting to the roof of the vehicle, which can be fixed to a longitudinal rod in the roof of the vehicle by means of bolts and other fixing pieces. A bottom of the front plate 1 is provided with a luggage rack 6. In the folded state of the front plate 1 and the rear plate 2, the front plate 1 is located above the rear plate 2, and the luggage rack 6 is located on a top of the tent. Thus luggage can be arranged on the luggage rack 6, which is convenient for the user to travel outdoors and provides a better experience.

The rope 3 is a flexible and deformable tension cable, which can be bent and accommodated between the front plate 1 and the rear plate 2 in the folded state of the front plate 1 and the rear plate 2, and be tensioned to provide supporting force to the front plate 1 in the deployed state of the front plate 1 and the rear plate 2. In addition, preferably, the rope 3 is a bendable steel rope, which can withstand a large tensile force and a large bending moment, and is not easy to break, leading to a more secure connection.

With reference to FIG. 1, a length and a connection position of the rope 3 are designed so that in the deployed state of the front plate 1 and the rear plate 2, the front plate 1 is inclined in a manner that a front end of the front plate is higher than a rear end of the front plate, that is, an angle between the front plate 1 and the rear plate 2 is not a flat angle. Through such a design in which the front plate 1 is slightly inclined, water would not accumulate on the front plate 1 and would flow along an inclined surface of the front plate 1 onto the rear plate 2 which can be provided with drainage holes for draining. In addition, preferably, the angle between the front plate 1 and the rear plate 2 is 175°-178°, that is, an angle α between the front plate 1 and the horizontal plane is 2°-5°. A plane of the front plate 1 is close to the horizontal plane, which leads to a flat structure.

With reference to FIGS. 1-3, in this embodiment, a middle frame 7 is arranged between the front plate 1 and the rear plate 2. A middle part of the rope 3 is connected to the middle frame 7, specifically connected to a middle portion or a top of the middle frame 7. In the folded state of the front plate 1 and the rear plate 2, the middle frame 7 is sandwiched between the front plate 1 and the rear plate 2. In the deployed state of the front plate 1 and the rear plate 2, the middle frame 7 is erected and perpendicular to the rear plate 2. The rope 3, the front plate 1 and the middle frame 7 form a triangular structure, the rope 3, the rear plate 2 and the middle frame 7 also forming a triangular structure. The triangular structure is stable, which makes the front plate 1 more stable and an overall frame of the roof tent more solid.

Specifically, the middle frame 7 is provided with a pulley 71. The middle part of the rope 3 is slidably connected to the pulley 71. The rope 3 is preferably a steel rope. The steel rope and the pulley 71 cooperate with each other to form a steel rope-pulley mechanism which has a small friction coefficient and stable power transmission, and is beneficial to improving a stability and reliability of the overall frame of the roof tent.

The middle frame 7 is an inverted U-shaped frame. A bottom of the middle frame 7 is fixed on the middle plate 72. Preferably, the middle plate 72 has a width greater than a width of a side of the middle frame 7 to form a T-shaped frame structure with the side of the middle frame. Furthermore, except for the sides pivotally connected to the middle plate 72, all other sides of the front plate 1 and the rear plate 2 are provided with ridges 10. In a folded state of the front plate 1 and the rear plate 2, the ridges 10 on the front plate 1 and the rear plate 2 abut against the middle frame 7 respectively, so that there is enough space within the folded tent to accommodate the tarpaulin and the inverted U-shaped supporting rod 4. In a folded state of the front plate 1 and the rear plate 2, the ridges 10 also cooperate with the T-shaped frame to facilitate the folding of the front plate 1 and the rear plate 2.

Preferably, the rope 3 is connected to a middle part of the side of the middle frame 7. That is, the pulley 71 is arranged in the middle part of the side of the middle frame. Preferably, the pulley 71 is arranged in a middle part of an inner side of the side of the middle frame. In the folded state of the front plate 1 and the rear plate 2, the pulley 71 is housed and hidden within the roof tent. The inner side of the side of the middle frame is provided with a mounting piece 73, on which a pulley support for mounting the pulley 71 is provided. Preferably, the mounting piece 73 has an inverted T-shape, which leads to a stable structure.

There are three inverted U-shaped supporting rods 4, each of which is hinged to a respective one of the front plate 1, the middle frame 7, and the rear plate 2. One of the inverted U-shaped supporting rods 4 is hinged to the front end of the front plate 1 so as to form the opening for entering and exiting the tent as described above. One of other two inverted U-shaped supporting rods 4 is hinged to the rear plate 2, and another of other two inverted U-shaped supporting rods 4 is hinged to the middle frame 7, specifically to the mounting piece 73 on the inner side of the side of the middle frame 7. A hinging portion of the rear plate 2 to which the inverted U-shaped supporting rod 4 is hinged can be close to the middle frame 7. One end of the rope 3 can be fixed to the hinging portion, and another end of the rope 3 is fixed to a fixing portion of the front plate 1. A distance between the fixing portion and the middle frame 7 can be greater than a distance between the hinging portion and the middle frame 7, so as to make the front plate 1 more stable. Both ends of the rope 3 can be fixed by screws 9 or other fixing parts.

Preferably, there are two ropes 3, each of which is connected to a respective one of the two sides of the middle frame 7. One end of the rope 3 is connected to a side of the front plate 1, and another end of the rope 3 is connected to a side of the rear plate 2, which further improve the stability of the front plate 1.

### Second embodiment

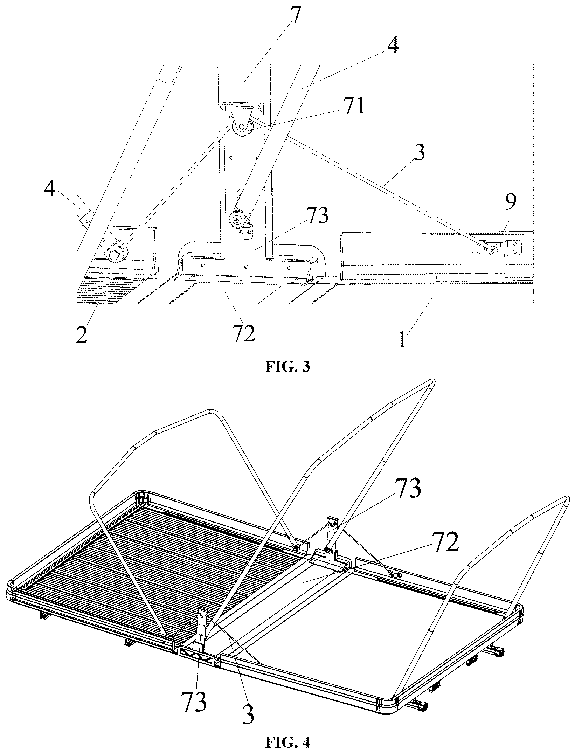

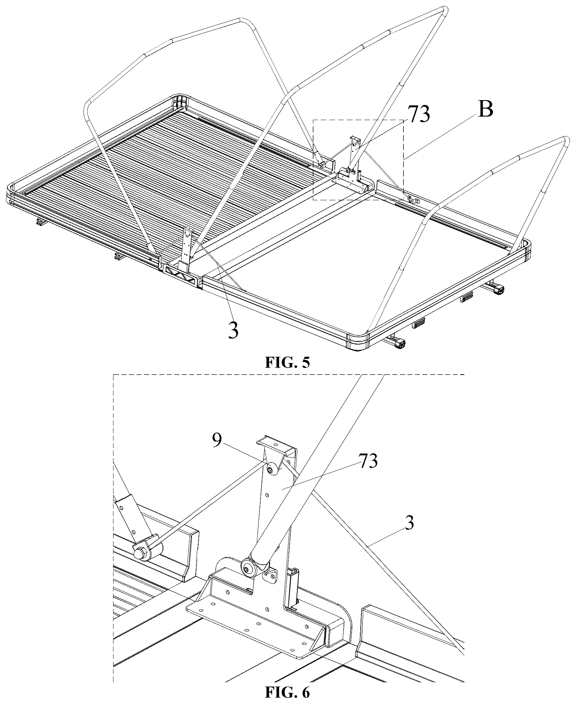

Another embodiment is shown in FIG. 4. The only difference between this embodiment and the first embodiment is that the middle frame 7 may not be provided. The mounting piece 73 with an inverted T-shape is directly fixed and installed on the middle plate 72, and the pulley 71 can also be installed on the mounting piece 73, which leads to a simple structure. Specifically, the mounting pieces 73 can be fixed on two sides of the middle plate 72, and each of the mounting pieces cooperates with a respective one of two ropes 3. In the folded state of the front plate 1 and the rear plate 2, the ridges 10 on the front plate 1 and the rear plate 2, and the mounting pieces 73 are accommodated within the tent. In addition to connecting the rope 3 to the pulley 71, the middle part of the rope 3 can also be fixed by a fixing part, specifically by a screw 9. As shown in FIG. 5 and FIG. 6. There is no pulley support on the mounting piece 73, and the middle part of the rope 3 is connected to the mounting piece 73 by a screw 9. In a case that the middle frame 7 is provided, the rope 3 can also be directly fixed to the middle frame 7 by a screw 9. The rope 3, the front plate 1 and the middle frame 7 form the triangular structure, and the rope 3, the rear plate 2 and the middle frame 7 also forming a triangular structure.

### Third embodiment

This embodiment provides a locking structure for the plates of the tent including a plurality of base plates, and edges of the base plates are hinged to one another to allow each of the base plates to rotate to a deployed state or a folded state. Each of the base plates is provided with a guiding part 14. The guiding parts are in continuity with each other in a straight line in a state in which the base plates are rotated into a same plane. A stopper 16 is arranged in the guiding parts 14. The stopper is slideable along the guiding parts 14 to prevent rotating and folding of the base plates when the stopper 16 spans at least two base plates, and to allow the rotating and folding of the base plates when the stopper 16 slides onto only one of the base plates. By the sliding of the stopper 16 in the guiding parts 14, the rotating of the base plates is prevented or allowed without being assembled or disassembled, which makes the tent convenient to use, easy to carry, and leads to a simple structure.

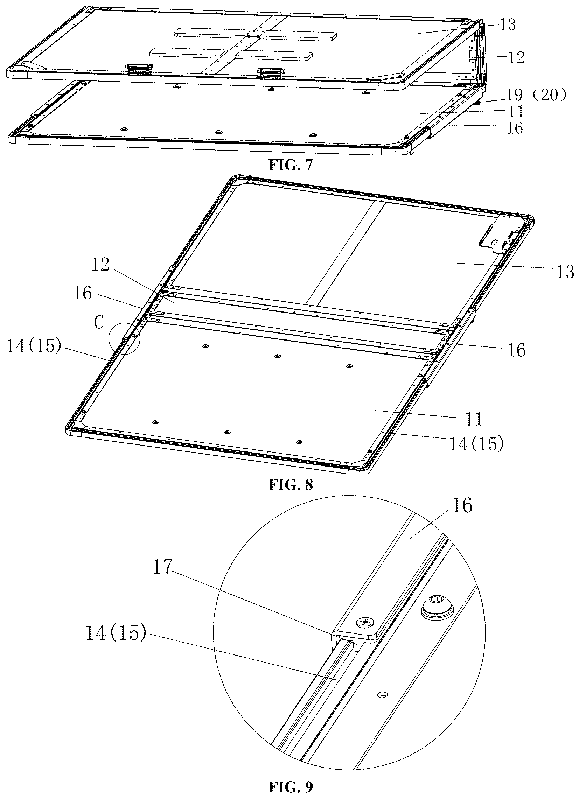

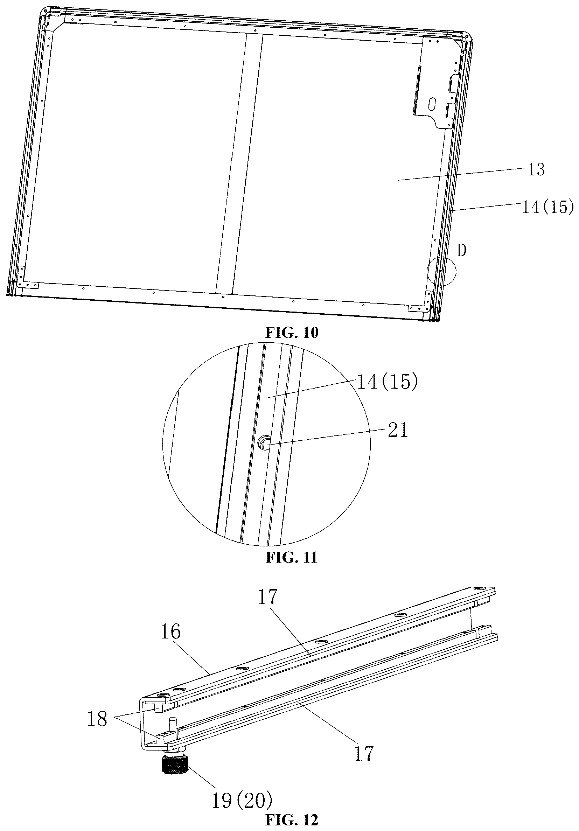

As shown in FIGS. 7 to 12, this embodiment also provides foldable plates for the tent, in which the aforementioned locking structure for the plates of the tent is provided. There are three base plates, which are a bottom plate 11, a side plate 12 and a top plate 13. A rear edge of the bottom plate 11 is rotatably connected to a front edge of the side plate 12, and a rear edge of the side plate 12 away from the bottom plate 11 is rotatably connected to a front edge of the top plate 13 to allow the side plate 12 to rotate to an erected position relative to the bottom plate 11 and the top plate 13 to rotate to a position above the bottom plate 11, or allow the bottom plate 11, the side plate 12 and the top plate 13 to rotate into a same plane. Each of the bottom plate 11, the side plate 12 and the top plate 13 is provided with a guiding part 14. The guiding parts 14 are in continuity with each other in a straight line in a state in which the bottom plate 11, the side plate 12 and the top plate 13 are rotated into a same plane. The stopper 16 is arranged in the guiding parts. The stopper 16 is slideable along the guiding parts 14 to prevent rotating of the side plate 12 and the top plate 13 when the stopper 16 spans the bottom plate 11, the side plate 12 and the top plate 13, and to allow the rotating of the side plate 12 and the top plate 13 when the stopper 16 slides onto only the bottom plate 11 or the top plate 13. In this embodiment, by the sliding of the stopper 16 in the guiding parts 14, the rotating of the side plate 12 and the top plate 13 is prevented or allowed without being assembled or disassembled, which makes the tent convenient to use, easy to carry, and leads to a simple structure.

Furthermore, the stopper 16 is provided with a bolt 19 movable with the stopper 16. Holes 21 are provided on moving passages of the bolt 19 on the top plate 13 and the bottom plate 11 to prevent sliding of the stopper 16 when the bolt 19 is aligned with the hole 21 and inserted into the hole 21. Preferably, the bolt 19 is a spring pin 20, which is known in the related art and will not be described here. The sliding of the stopper 16 is prevented when the spring pin 20 is aligned with the hole 21 and inserted into the hole 21. The sliding of the stopper 16 is allowed when the spring pin 20 exits the hole 21 by pulling the spring pin 20 in a direction away from the stopper 16. Specifically, the stopper 16 is located on the bottom plate 11 or the top plate 13 to allow the rotating of the side plate 12 and the top plate 13. On this condition, when the spring pin 20 is aligned with the hole 21 on the bottom plate 11 or the top plate 13 and inserted into the hole 21, or the stopper 16 slides from the bottom plate 11 to the top plate 13 or from the top plate to the bottom plate 11 and spans the bottom plate 11, the side plate 12, and the top plate 13, the rotating of the side plate 12 and the top plate 13 is prevented. At this time, the spring pin 20 is aligned with the hole 21 on the bottom plate 11 or the top plate 13 and inserted into the hole 21 to prevent the rotating of the side plate and the top plate 13.

Further, a soft protector 17 is provided. The soft protector 17 is arranged between the stopper 16 and the guiding part 14, so that the stopper 16 is separated from the bottom plate 11, the side plate 12 and the top plate 13 when sliding. Specifically, the soft protector 17 is made of plastic, and the stopper 16 is made of metal. The soft protector 17 made of plastic can reduce a noise generated by a sliding friction between the stopper 16 and the bottom plate 11, the side plate 12 and the top plate 13. Moreover, the soft protector 17 can also prevent paint on the stopper 16, the bottom plate 11, the side plate 12 and the top plate 13 from peeling off.

Preferably, the guiding parts 14 are sliding grooves 15. The sliding grooves 15 are respectively arranged on left sides and right sides of the bottom plate 11, the side plate 12 and the top plate 13. In a state in which the bottom plate 11, the side plate 12 and the top plate 13 are rotated into the same plane, the sliding grooves 15 on the left sides of the bottom plate 11, the side plate 12 and the top plate 13 are in continuity with each other in a straight line, the sliding grooves 15 on the right sides of the bottom plate 11, the side plate 12 and the top plate 13 are also in continuity with each other in a straight line, and two stoppers 16 are respectively slidably snapped into the sliding grooves 15 on the left sides and right sides of the bottom plate 11, the side plate 12, and the top plate 13.

Each of upper surfaces and lower surfaces of the left sides and the right sides of the bottom plate 11, the side plate 12 and the top plate 13 is provided with a sliding groove 15. The stopper is a C-shaped pipe. Two soft protectors 17 are respectively arranged on inner walls of an upper side and a lower side of an opening of the stopper 16, and cover and protect the inner walls of the upper side and the lower side of the stopper 16, so as to separate the stopper 16 from the sliding grooves 15 when sliding. A lug 18 protrudes downward from the soft protector 17 on the inner wall of the upper side, and another lug protrudes upward from the soft protector 17 on the inner wall of the lower side. The lugs 18 are simultaneously slidably snapped into the sliding grooves 15 on the upper surface and the lower surface, so that the stopper 16 slidably is snapped into the sliding grooves 15 of the bottom plate 11. Thus during sliding, noise can be reduced and the peeling off of the paint can be relieved since the stopper 16 is slidably snapped into the sliding groove 15 via the soft protector 17.

Further, a length of the stopper 16 is less than a length of the top plate 13 and a length of the bottom plate 11, and greater than a length of the side plate 12. Therefore when the stopper 16 moves onto the side plate 12, the stopper would extend beyond the side plate 12, so that two ends of the stopper 16 are respectively located on the bottom plate 11 and the top plate 13, thereby preventing the rotating of the side plate 12 and the top plate 13. Moreover, when the stopper 16 slides onto the bottom plate 11 or the top plate 13, the rotating of the side plate 12 and the top plate 13 can be allowed.

### Fourth embodiment

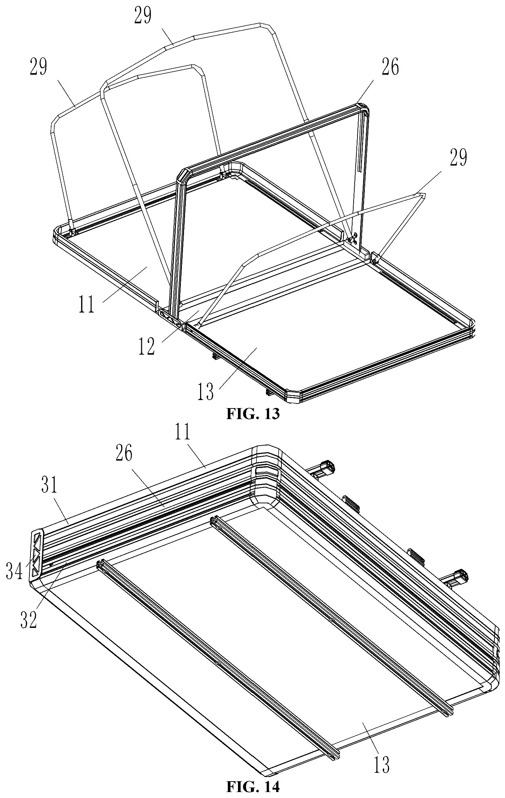

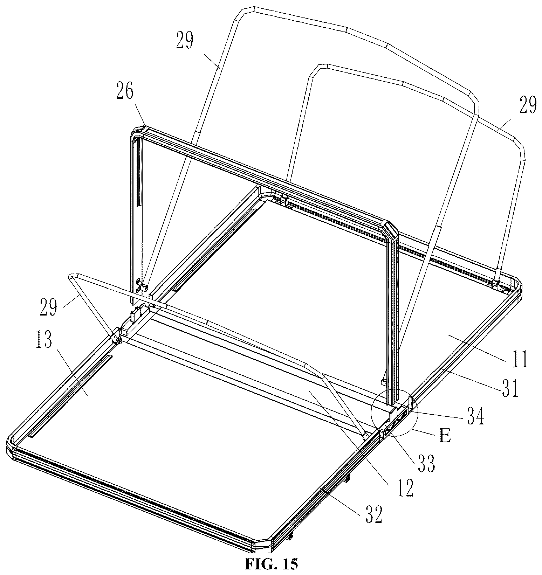

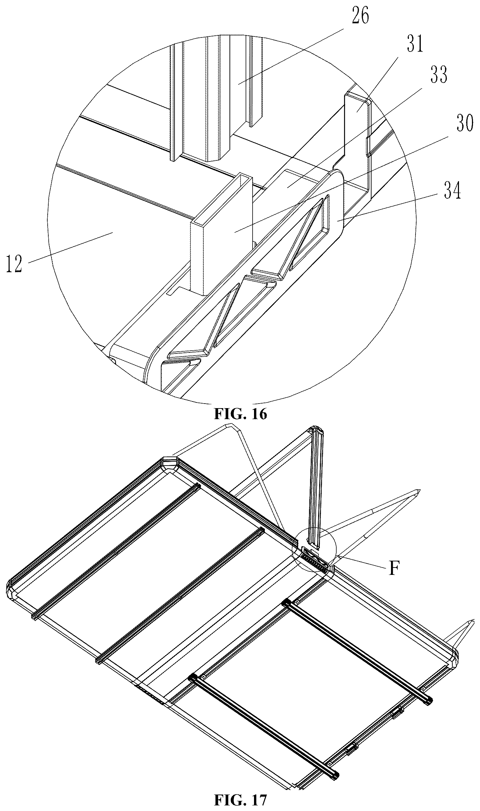

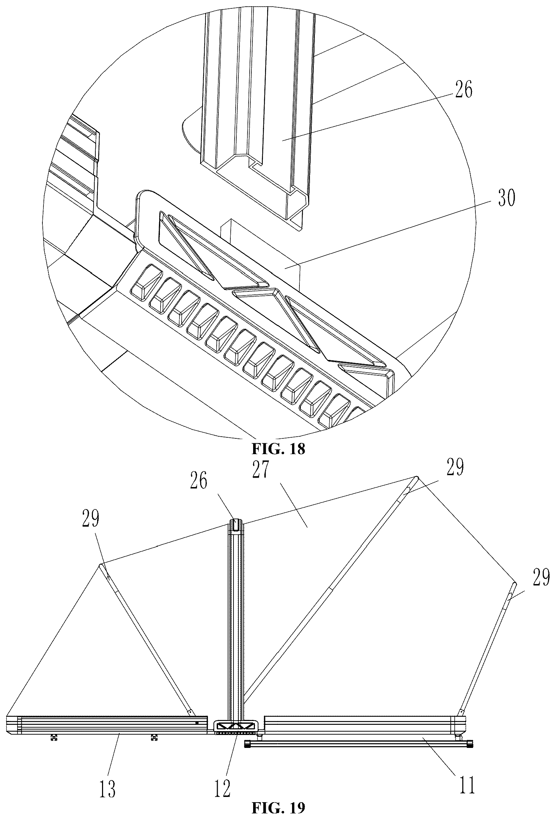

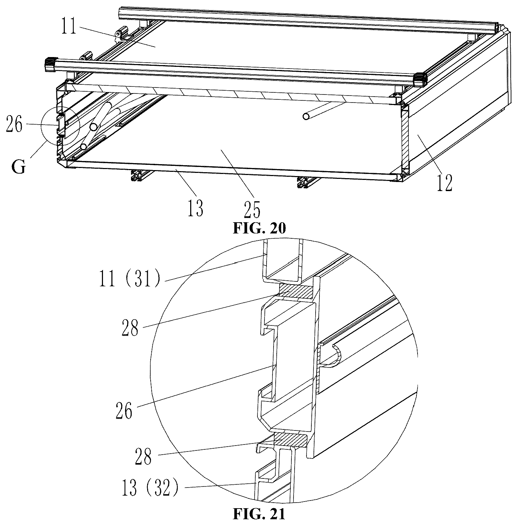

As shown in FIGS. 13-22, this embodiment provides a roof tent including a bottom plate 13, a side plate 12 and a top plate 11. The bottom plate 13 is horizontally arranged and configured to be fixed on a roof of a vehicle. An edge of the bottom plate 13 is hinged to an edge of the side plate 12, and another edge of the side plate 12 away from the bottom plate 13 is hinged to an edge of the top plate 11. Above hinging can be achieved by any known hinging structure such as the hinge, which is not specifically limited. Through hinging, the side plate 12 is rotatable to an erected position relative to the bottom plate 13, and the top plate 11 is rotatable to a position above the bottom plate 13, such that the bottom plate 13, the side plate 12 and the top plate 11 are folded into a C-shape, so as to realize the folding of the roof tent (with reference to FIGS. 14 and 20). Furthermore, the side plate 12 and the top plate 11 are rotatable into a same plane as the bottom plate 13, so as to realize the deploying of the roof tent (with reference to FIGS. 13 and 19). Moreover, an accommodation space 25 is formed between the top plate 11 and the bottom plate 13 in a state in which the top plate 11 is rotated to the position above the bottom plate 13 (with reference to FIG. 20).

A supporting frame 26 is fixed on the side plate 12. With reference to FIGS. 13 and 15-18. Preferably, the supporting frame 26 is U-shaped. The bottom plate 13 has a same shape as the top plate 11. The U-shaped contour matches the shape of the bottom plate 13 and the top plate 11. The supporting frame 26 is perpendicular to the side plate 12 and is fixed to the side plate 12 on an opening side of a U-shape structure. The fixing can be achieved by any known fixing manner such as welding or screwing. More preferably, the supporting frame 26 is a U-shaped tube. Plugs 30 that are embedded into the U-shaped tube of the supporting frame 26 protrude from the side plate 12 to make the fixing more secure. Of course, the supporting frame 26 can also form other shapes such as a square, with reference to FIG. 20, as long as the supporting frame 26 extends upward to support the tarpaulin 27 above the side plate 12, the top plate 11 and the bottom plate 13 in the deployed state of the roof tent. With reference to FIG. 20, in a folded state of the roof tent, the supporting frame 26 is rotated with the side plate 12 until located between the top plate 11 and the bottom plate 13. A top side of the supporting frame abuts against the top plate 11, and a bottom side of the supporting frame abuts against the bottom plate 13, to enclose the accommodation space 25 with the side plate 12 from outside. At this time, a top side of the accommodation space 25 is sealed by the top plate 11, and the bottom side of the accommodation space 25 is sealed by the bottom plate 13, thereby the accommodation space 25 is sealed and isolated from the outside to prevent an entry of dust and rain.

With reference to FIG. 19, to enable the tarpaulin 27 to automatically fold and deploy with the rotating of the side plate 12 and the top plate 11, preferably, a side of the tarpaulin 27 is connected to the bottom plate 13, another side of the tarpaulin is connected to the top plate 11, and a middle part of the tarpaulin is fixed to the supporting frame 26. In a state in which the top plate 11 is rotated to the position above the bottom plate 13, the tarpaulin 27 is folded with the accommodation space 25 (with reference to FIG. 20, wherein the tarpaulin is omitted in FIG. 20). In a state in which the side plate 12 and the top plate 11 are rotated to the deployed state, the tarpaulin 27 deploys above the bottom plate 13, the side plate 12 and the top plate 11, and the supporting frame 26 supports the tarpaulin 27 in the middle part. More preferably, the tent further includes a plurality of supporting rods 29. The bottom ends of the supporting rods 29 are respectively hinged to the bottom plate 13, the side plate 12 or the top plate 11. A number and hinging positions of the supporting rods are not limited, which are designed according to specific requirements. Each supporting rod 29 is preferably U-shaped. Two ends of the U-shaped structure are respectively hinged to the left side and the right side of the bottom plate 13, the side plate 12 or the top plate 11. Top ends of the supporting rods 29 are connected to the tarpaulin 27 at positions spaced apart from each other on the tarpaulin. During the folding of the tarpaulin 27, the tarpaulin will drive each supporting rod 29 to rotate towards a folding direction and lie down, and to be accommodated within the accommodation space 25 with the tarpaulin. During the deploying of the tarpaulin 27, the tarpaulin will drive each supporting rod 29 to rotate towards a deploying direction and support the tarpaulin 27 at a corresponding position. More preferably, a supporting rod 29 is also pivotally connected to a U-shaped side wall of the supporting frame 26. During deploying, the supporting rod 29 rotates the supporting frame 26 to support the tarpaulin. In this condition, the supporting rod 29 is pivotally connected to the supporting frame at a higher position, which shortens a length of the supporting rod 29 and reduces an occupation of lower space.

With reference to FIGS. 20 and 21, in a preferred embodiment, a flexible sealing strip 28 is installed on each of two sides of the supporting frame 26. When the supporting frame 26 abuts against the top plate 11 and the bottom plate 13, the sealing strip 28 on one side of the supporting frame is clamped between the supporting frame 26 and the top plate 11 for sealing, and the sealing strip 28 on another side of the supporting frame is clamped between the supporting frame 26 and the bottom plate 13 for sealing, to enhance a sealing effect.

In a more preferred embodiment, a bottom plate flange 32 protrudes from a side of the bottom plate 13 for abutting against the supporting frame 26. The bottom plate 13 abuts against the supporting frame 26 by means of the bottom plate flange 32. A top plate flange 31 protrudes from a side of the top plate 11 for abutting against the supporting frame 26. The top plate 11 abuts against the supporting frame 26 by means of the top plate flange 31. Bosses 33 protrude from portions of the side plate 12 for fixing the supporting frame (i.e., two portions of the side plate corresponding to two ends of the U-shaped structure of the supporting frame). A shutter is formed on an outer side of each boss. The bottom plate flange 32 and the top plate flange 31 abut against the bosses 33 in the folded state. The shutter 34 shelters seams formed due to the abutment of the boss 33 and the bottom plate flange 32 as well as the top plate flange 31 in the folded state. In the deployed state, the top plate flange 31, the bottom plate flange 32 and the bosses 33 can serve as a fence. Such arrangement can avoid a difficulty in installation and fixation caused by an excessive width of the supporting frame 26 and an inconvenience use. Of course, this embodiment is merely a preferred embodiment. The bottom plate 13 and the top plate 11 can also be flat (not shown in the drawings), or it can be designed that only the top plate flange 31 and the bottom plate flange 32 are provided, and the side plate is not provided with the boss 33. In the folded state, the top plate flange 31 and the bottom plate flange 32 directly abut against the side plate 12 for sealing (not shown in the drawings).

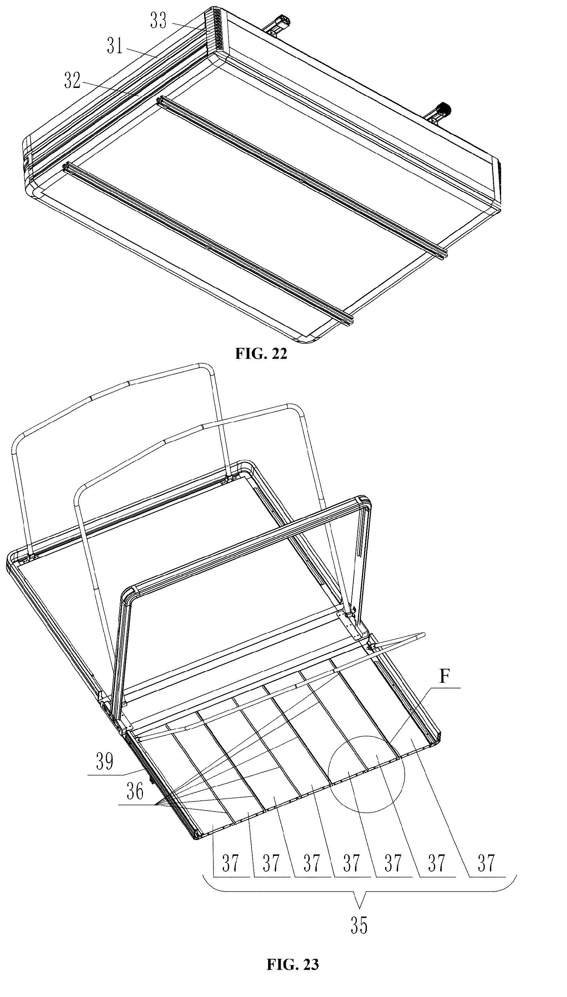

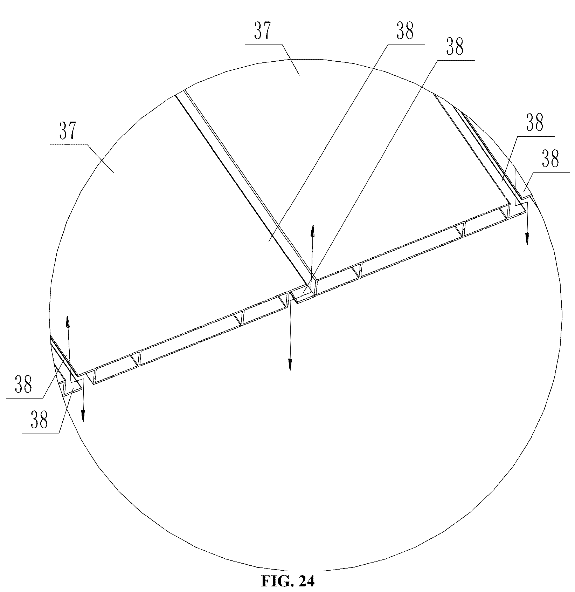

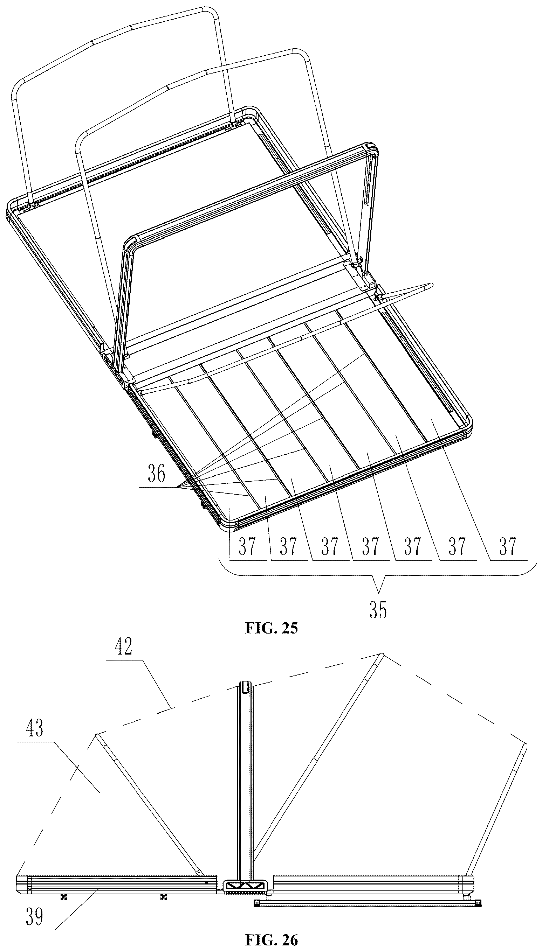

A preferred embodiment for the base plates is as follows:
As shown in FIGS. 23-29, among the plates, the plate configured to be fixed above the roof of the vehicle serves as a bottom plate body. A tent body 42 that can be deployed and folded above the bottom plate body 35 is installed on the bottom plate body 35, so as to form a tent space 43 for users to enter into between the bottom plate body 35 and the tent body 42 in the deployed state (with reference to FIG. 26). A structure of the tent body 42 is not specifically limited and can be any known structure for a roof tent with the above mentioned functions.

The bottom plate body 35 is configured to be horizontally fixed above the roof of the vehicle and is longitudinally spaced from the roof of the vehicle, so that the tent body 42 can be deployed and folded above the roof of the vehicle, which is a conventional installation manner for a roof tent and will not be described in detail. In a deployed state of the tent body 42, the bottom plate body 35 serves as at least a part of a bottom of the tent body 42 (with reference to FIG. 25). At least one drainage and ventilation opening 36 is provided on the bottom plate body. The drainage and ventilation opening 36 passes through an upper surface and a lower surface of the bottom plate body 35. A shape and a number of the drainage and ventilation opening 36 are not specifically limited. The drainage and ventilation opening can be in the form of a strip or a hole. When rainwater falls on an outer surface of the tent body 42 and then slides onto the bottom plate body 35 along the outer surface of the tent body 42, the water can flow downward through the drainage and ventilation opening 36. Therefore, during using, an area below bedding or a floor mat can be ventilated through the drainage and ventilation opening 36 when the bedding or the floor mat is arranged on the bottom plate body 35, which enables the damp bedding or the damp floor mat to dry more easily.

Since the bottom plate body 35 is located above the roof of the vehicle, there will be a strong airflow flowing above the roof of the vehicle from front to rear when the vehicle is moving. Therefore, in a preferred embodiment, the drainage and ventilation opening 36 has an elongated shape extending linearly, and an extension direction thereof is a front-rear direction of the roof of the vehicle. Thus, the extension direction of the drainage and ventilation opening 36 is consistent with the direction of the airflow flowing above the roof of the vehicle so as to reduce wind resistance.

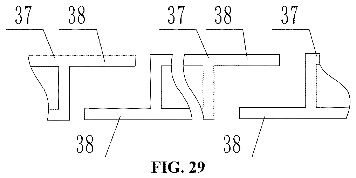

With reference to FIGS. 23-25, for the convenience of manufacturing, preferably, the bottom plate body 35 is composed of a plurality of plate members 37. The plate members 37 are spaced apart from each other to form a respective drainage and ventilation opening 36 between two adjacent plate members 37. In the preferred embodiment wherein the extension direction of the drainage and ventilation opening 36 is the front-rear direction of the roof of the vehicle, the plate members 37 are spaced apart from each other along a left-right direction of the roof of the vehicle. More preferably, each of the plate members 37 is provided with tabs 38 extending towards the drainage and ventilation openings 36 next to this plate member. Two tabs 38 of each two adjacent plate members 37 are spaced apart from each other vertically, and one of the two tabs 38 extends below another of the two tabs 38. During driving of the vehicle, the tabs 38 serve as barriers against wind. Therefore, the wind cannot directly pass through the drainage and ventilation opening vertically so as to reduce wind noise. Moreover, when the plate members 37 are deformed under pressure from above, the plate members 38 can support each other through the tabs 38. In an embodiment of the plate members 37, one of each two adjacent plate members 37 is provided with tabs extending transversely from tops of two sides of this plate member, and another plate member 37 is provided with tabs extending transversely from bottoms of two sides of this plate member. In another embodiment of the plate members 37, each of the plate members 37 is provided with a tab 38 extending transversely from a top of one of two sides of this plate member, and provided with another tab 38 extending transversely from a bottom of another side of this plate member (with reference to FIG. 29). Preferably, the plate members 37 are made of plastic, but not limited to this. The plate members 37 may also be made of other material, such as metal.

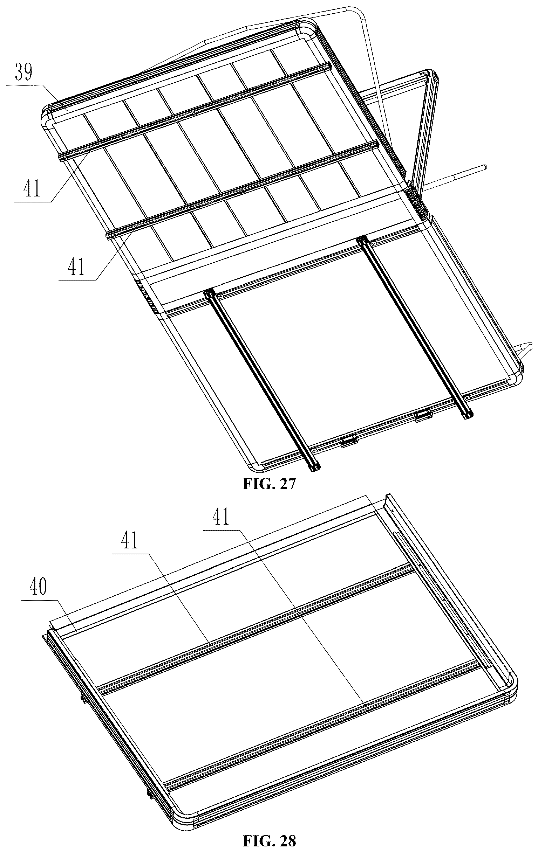

With reference to FIGS. 27 and 28, preferably, to facilitate fixing of the plate members 37, a bottom plate frame 39 is provided. Installation grooves 40 into which two ends of each plate member 37 are inserted are arranged on inner sides of the bottom plate frame 39, so as to achieve a better fixing effect for the plate members 37. Of course, the plate members 37 can also be fixed by any other known fixing manner. More preferably, to achieve a better support for the plate members 37, at least one supporting beam 41 is fixed on a bottom side of the bottom plate frame 39. The supporting beam 41 spans the plate members 37, and abuts against and supports bottom sides of the plate members 37 to support the plate members 37 upwards.

Above described embodiments are merely preferred embodiments of the present disclosure and do not limit the scope of the present disclosure. All equivalent modifications made according to the conception of the present disclosure fall within the protection scope of the present disclosure.

## Claims

1. A tent structure wherein the tent structure comprises a plurality of base plates, edges of the base plates being hinged to one another to allow each of the base plates to rotate to a deployed state or a folded state.

2. The tent structure according to claim 1, wherein the tent structure is provided with three base plates, which are a front plate, a rear plate and a middle plate, the tent structure further comprising a rope, one side of the front plate being pivotally connected to one side of the middle plate, one side of the rear plate being pivotally connected to another side of the middle plate, the front plate and the middle plate being rotatable to the deployed state in which the front plate and the rear plate are flatly deployed or to the folded state in which the front plate and the rear plate are folded onto one another, one end of the rope being connected to the front plate, another end of the rope being connected to the rear plate, the rear plate being fixed on a roof of a vehicle, the front plate being tensioned in a suspended manner by the rope in the deployed state of the front plate and the rear plate.

3. The tent structure according to claim 2, wherein the tent structure further comprises a middle frame arranged on the middle plate, a middle part of the rope being connected to the middle frame, in the deployed state of the front plate and the rear plate, the middle frame being erected, the rope, the front plate and the middle frame forming a triangular structure, the rope, the rear plate and the middle frame also forming a triangular structure.

4. The tent structure according to claim 3, wherein a pulley is arranged on the middle frame, and the middle part of the rope is slidably connected to the pulley.

5. The tent structure according to claim 3, wherein the middle frame is an inverted U-shaped frame, a bottom of the middle frame being fixed on the middle plate, the middle plate has a width greater than a width of a side of the middle frame to form a T-shaped frame structure with the side of the middle frame, sides of the front plate and the rear plate being provided with ridges, the ridges cooperating with the T-shaped frame in the folded state of the front plate and the rear plate.

6. The tent structure according to claim 2, wherein the front plate is inclined in a manner that a front end of the front plate is higher than a rear end of the front plate in the deployed state of the front plate and the rear plate.

7. The tent structure according to claim 1, wherein each of the base plates is provided with a guiding part, the guiding parts being in continuity with each other in a straight line in a state in which the base plates are rotated into a same plane, a stopper being arranged in the guiding parts, the stopper being slideable along the guiding parts to prevent rotating and folding of the base plates when the stopper spans at least two base plates, and to allow the rotating and folding of the base plates when the stopper slides onto only one of the base plates.

8. The tent structure according to claim 7, wherein the tent structure is provided with three base plates, which are a bottom plate, a side plate and a top plate, a rear edge of the bottom plate being rotatably connected to a front edge of the side plate, and a rear edge of the side plate away from the bottom plate being rotatably connected to a front edge of the top plate to allow the side plate to rotate to an erected position relative to the bottom plate and the top plate to rotate to a position above the bottom plate, or allow the bottom plate, the side plate and the top plate to rotate into a same plane,
each of the bottom plate, the side plate and the top plate is provided with a guiding part, the guiding parts being in continuity with each other in a straight line in a state in which the bottom plate, the side plate and the top plate are rotated into a same plane, the stopper being arranged in the guiding parts, the stopper being slideable along the guiding parts to prevent rotating of the side plate and the top plate when the stopper spans the bottom plate, the side plate and the top plate, and to allow the rotating of the side plate and the top plate when the stopper slides onto only the bottom plate or the top plate.

9. The tent structure according to claim 8, wherein the stopper is provided with a bolt movable with the stopper, holes being provided on moving passages of the bolt on the top plate and the bottom plate to prevent sliding of the stopper when the bolt is aligned with the hole and inserted into the hole.

10. The tent structure according to claim 1, wherein the tent structure is provided with three base plates, which are a bottom plate, a side plate and a top plate, an edge of the bottom plate being hinged to an edge of the side plate, and another edge of the side plate away from the bottom plate being hinged to an edge of the top plate, to allow the side plate to rotate to an erected position relative to the bottom plate, and the top plate to rotate to a position above the bottom plate to come into the folded state and form an accommodation space with the bottom plate, and to allow the side plate and the top plate to rotate into a same plane with the bottom plate to come into the deployed state,
a supporting frame is fixed on the side plate, in the deployed state, the supporting frame extending upward to support a tarpaulin above the side plate, the top plate and the bottom plate; in the folded state, the supporting frame is rotated with the side plate until located between the top plate and the bottom plate, a top side of the supporting frame abuts against the top plate, and a bottom side of the supporting frame abuts against the bottom plate, to enclose the accommodation space with the side plate from outside.

11. The tent structure according to claim 10, wherein the supporting frame is U-shaped, perpendicular to the side plate, and fixed to the side plate on an opening side of a U-shape structure.

12. The tent structure according to claim 11, wherein a bottom plate flange protrudes from a side of the bottom plate for abutting against the supporting frame, the bottom plate abutting against the supporting frame by means of the bottom plate flange, a top plate flange protruding from a side of the top plate for abutting against the supporting frame, the top plate abutting against the supporting frame by means of the top plate flange.

13. The tent structure according to claim 11, wherein bosses protrude from portions of the side plate for fixing the supporting frame, the bottom plate flange and the top plate flange abutting against the bosses in the folded state.

14. The tent structure according to claim 13, wherein a shutter is formed on an outer side of each boss, the shutter sheltering seams formed due to the abutment of the boss and the bottom plate flange as well as the top plate flange in the folded state.

15. The tent structure according to claim 10, wherein a side of the tarpaulin is connected to the bottom plate, another side of the tarpaulin being connected to the top plate, the tarpaulin being folded within the accommodation space when the top plate is rotated to the position above the bottom plate, the tarpaulin being deployed above the bottom plate, the side plate and the top plate when the side plate and the top plate are rotated to the deployed state, the tent structure further comprising a plurality of supporting rods, bottom ends of the supporting rods being hinged to the bottom plate, the side plate or the top plate, top ends of the supporting rods being connected to the tarpaulin at positions spaced apart from each other on the tarpaulin.

16. The tent structure according to claim 1, wherein the plate member comprises a bottom plate body configured to be fixed above a roof of a vehicle, at least one drainage and ventilation opening being provided on the bottom plate body, the drainage and ventilation opening passing through an upper surface and a lower surface of the bottom plate body.

17. The tent structure according to claim 16, wherein the bottom plate body is composed of a plurality of plate members, the plate members being spaced apart from each other to form a respective drainage and ventilation opening between two adjacent plate members.

18. The tent structure according to claim 17, wherein each of the plate members is provided with tabs extending towards the drainage and ventilation openings next to this plate member, two tabs of each two adjacent plate members being spaced apart from each other vertically and one of the two tabs extending below another of the two tabs.

19. The tent structure according to claim 16, wherein each of the drainage and ventilation openings has an elongated shape extending linearly, an extending direction of each of the drainage and ventilation openings is a front-rear direction of the roof of the vehicle.
